# EUROPÄISCHE PATENTSCHRIFT

(11) **EP 1 039 161 B1**
(45) Veröffentlichungstag und Bekanntmachung des Hinweises auf die Patenterteilung: **11.08.2004**
(21) Anmeldenummer: 00106274.4
(22) Anmeldetag: 23.03.2000
(51) Int. Cl.: F16C 33/76, F16C 27/06

(54) **Wellenabdichtung**
Shaft seal
Etanchéité pour arbre

(30) Priorität: 26.03.1999 DE 19913821
(43) Veröffentlichungstag der Anmeldung: 27.09.2000
(73) Patentinhaber: Interseal Dipl.-Ing. Rolf Schmitz GmbH, 65205 Wiesbaden (DE)
(72) Erfinder: Busch, Jochen, Dipl.-Ing., 65366 Geisenheim-Johannisberg (DE); Schmitz, Rolf, Dipl.-Ing., 65207 Wiesbaden (DE)
(74) Vertreter: Blumbach, Kramer & Partner GbR

(56) Entgegenhaltungen:
- EP-A- 0 603 840
- DE-A- 2 902 841
- DE-A- 4 444 719
- DE-A- 19 532 549
- US-A- 3 897 985

## Beschreibung

Die Erfindung bezieht sich auf eine Wellenabdichtung zum Abdichten zwischen einer Welle und einem Maschinengehäuse mit den Merkmalen des Oberbegriffs des Anspruchs 1.

Eine solche Wellenabdichtung ist aus der DE 195 32 549 A1 bekannt. Bei dieser Wellenabdichtung besteht der Überbrückungsabschnitt aus einem Elastomer, der die ringartigen Befestigungsteile mit einer gewissen Nachgiebigkeit miteinander verbindet und das Maschinengehäuse zum Lagergehäuse überbrückt. Dieser Elastomer-Überbrückungsabschnitt ist ein Formteil, das speziell angepaßt für die Wellenabdichtung angefertigt werden muß.

Bei einer weiteren bekannten Wellenabdichtung der eingangs angegebenen Art (DE 44 44 719 A1) besteht die Ausgleichseinrichtung bzw. deren Überbrückungsabschnitt aus einem Metallbalg oder Kompensator. Eine derartige Einrichtung ist teuer und bedingt große Toträume im Bereich der Wellendurchführung des Maschinengehäuses.

Zum Halten des Gegenringes einer Gleitringdichtung, der Schmiermittel zugeführt wird, ist es bekannt (EP 0 268 730 A2), einen radial inneren Ringbund und einen radial äusseren Halteflansch mit Sitzaussparungen für O-Ringe zu versehen und diese O-Ringe mit einer Ringscheibe und einem weiteren O-Ring zu halten. Die O-Ringe dienen der Abdichtung der Schmiermittelzufuhr. Die Gleitringdichtung und der durch den inneren Ringbund gebildete Gegenring liegen in axialer Richtung aneinander an.

Bei einem geschmierten Gleitlager ist es bekannt (US 3 301 613), ein äußeres, ringförmiges Drucklager zur Zufuhr von Schmiermittel anzuwenden und den Schmiermittelkanal mittels O-Ringen abzudichten, über die auch Lagerkräfte geführt werden. Ein Graphitring dient der Abdichtung des Schmiermittels von gefördertem Gut.

Der Erfindung liegt die Aufgabe zugrunde, eine Wellenabdichtung der eingangs angegebenen Art so auszubilden, daß die Ausgleichseinrichtung mit ihrem Überbrückungsabschnitt aus preiswerten handelsüblichen Komponenten aufgebaut werden kann, wobei Toträume weitgehend vermieden werden sollen, in denen sich abzudichtendes Gut ansammeln könnte.

Die gestellte Aufgabe wird aufgrund der Merkmale des Anspruchs 1 gelöst und durch die weiteren Merkmale der abhängigen Ansprüche ausgestaltet und weiterentwickelt.

Im einzelnen besteht der Überbrückungsabschnitt aus zwei Elastomer-Ringdichtungen, die im axialen Abstand voneinander angeordnet sind und die Beweglichkeit in die eine oder andere Richtung infolge ihrer elastischen Deformierung und im Maße dieser Deformierung ermöglichen.

Die Erfindung wird anhand der Zeichnung beschrieben. Dabei zeigt:
- Fig. 1: eine erste Ausführungsform einer Wellenabdichtung im Längsschnitt und
- Fig. 2: eine Wellenabdichtung für ein Rührwerk.

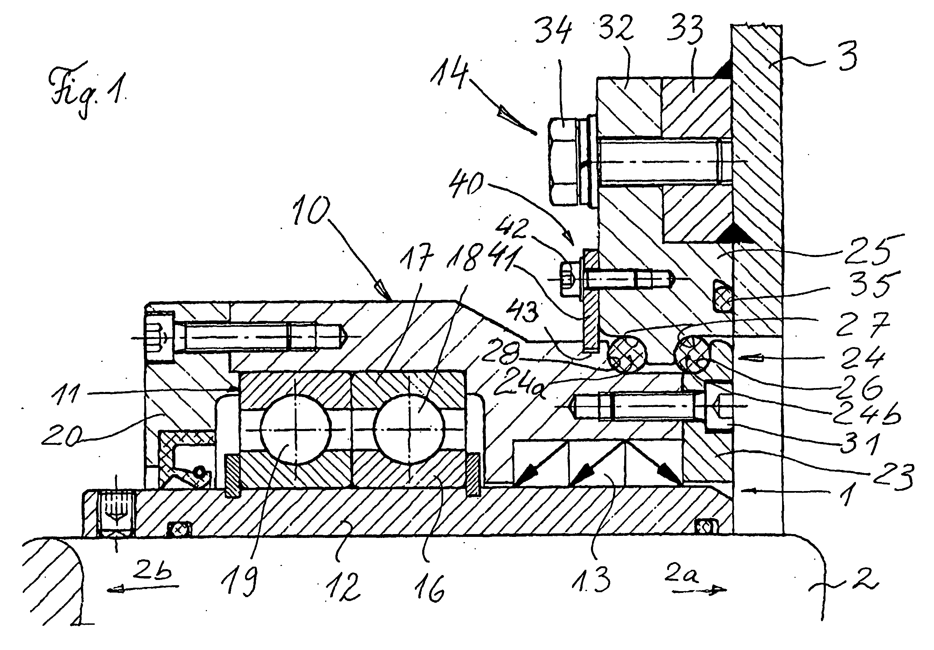

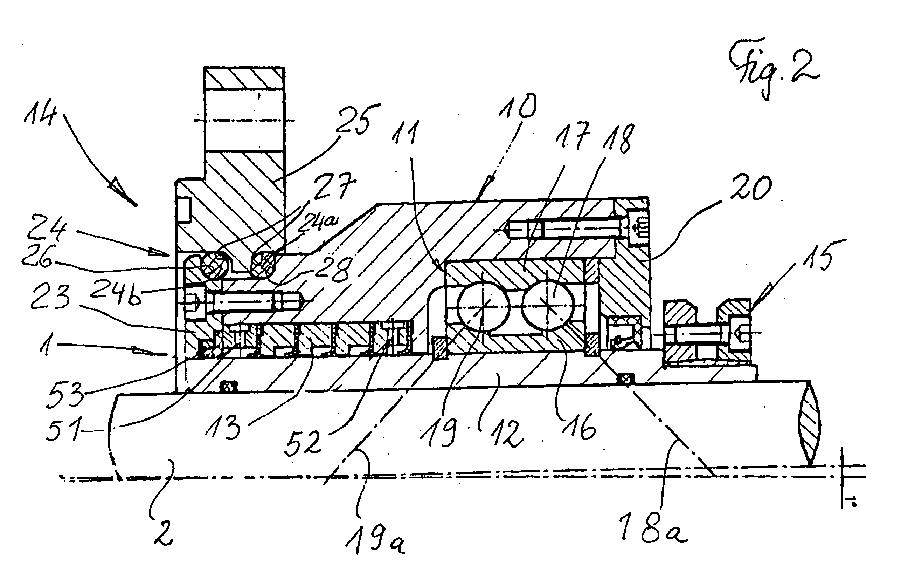

Fig. 1 zeigt einen Längsschnitt durch den Rand einer Wellenabdichtung im Bereich einer Lücke 1 zwischen einer Welle 2 und einem Gehäuse 3.
Es sind ein Dichtungs- und Lagergehäuse 10, eine Wälzlagereinrichtung 11, eine Wellenschonhülse 12, eine Reihe von Lippendichtungen 13 und eine Ausgleichseinrichtung 14 vorgesehen. Die Wellenschonhülse 12 weist eine zylindrische, beschichtete Lauffläche für die Lippendichtungen auf und ist mit der Welle 2 statisch abgedichtet verbunden und kann zu diesem Zweck mittels einer Spannkeileinrichtung 15 (Fig. 2) auf der Welle 2 festgezogen sein. Die Wellenschonhülse 12 hat die Aufgabe, die Wellenabdichtung als Patrone (cartridge) auszubilden, die insgesamt, als Baueinheit, auf der Welle 2 montiert wird. In dieser Baueinheit können die Lippendichtungen 13 präzise eingebaut werden, ohne den örtlichen Einschränkungen durch Welle 2 oder Gehäuse 3 unterworfen zu sein, und das Material und die Bearbeitung der Wellenschonhülse 12 können auf die Lippendichtungen 13 abgestimmt werden.

Die Wälzlagereinrichtung 11 hat die Aufgabe, das Lagergehäuse 10 zu führen, so daß dieses den Bewegungen der Welle 2 - außer der Rotation - folgt und umfaßt innere Laufringe 16, äußere Laufringe 17 und zwei Kugellagerreihen 18 und 19, die eine praktisch spielfreie Lagerung gewährleisten und zu diesem Zweck mittels Federringen an der Wellenschonhülse 12 bzw. in einer Ringaussparung des Lagergehäuses 10 mittels eines Lagerdeckels 20 gehalten werden. Das Dichtungs- und Lagergehäuse 10 folgt somit allen thermischen Bewegungen und Durchbiegungen der Welle 2, so daß der Abstand zwischen der Außenfläche der Buchse 12 und der Innenseite des Dichtungs- und Lagergehäuses 10 konstant bleibt. Die Lippendichtungen 13 können so unter optimalen Bedingungen arbeiten, d.h. bei der Rotation der Welle 2 und der Wellenschonhülse 12 gibt es keine Schläge auf die Lippendichtungen, welche deren Abdichtfähigkeit beeinträchtigen würden.

Die Ausgleichseinrichtung 14 hat die Funktion, es dem Lagergehäuse 10 zu ermöglichen, den Bewegungen und thermischen Änderungen der Welle 2 zu folgen, und gleichzeitig das Innere des Gehäuses 3 gegen das Gehäuseäußere abzudichten. Zu diesem Zweck umfaßt die Ausgleichseinrichtung 14 ein radial inneres, ringförmiges Befestigungsteil 23, einen nachgiebigen Überbrückungsabschnitt 24 und ein radial äußeres, ringförmiges Befestigungsteil 25.

Der Überbrückungsabschnitt 24 besteht aus zwei Elastomer-Ringdichtungen 24a, 24b mit kreisförmigem Querschnitt handelsüblicher Art. Die innere Ringscheibe 23 weist eine umlaufende, viertelkreisförmige Eckenaussparung oder Hohlkehle 26 an ihrem radialen Rand, benachbart zum Befestigungsteil 25, auf, der ebenfalls derartige umlaufende, viertelkreisförmige Hohlkehlen 27 besitzt, die in axialer Richtung nach innen bzw. außen des Maschinengehäuses 3 schauen. Auch am Abdichtungs- und Lagergehäuse 10 ist eine derartige umläufende, viertelkreisförmige Hohlkehle 28 vorgesehen, wobei sich die Hohlkehlen 26 und 28 in axialer Richtung gegenüberstehen. Die Hohlkehlen 26, 27, 28 bilden somit Sitzaussparungen zur Aufnahme der Ringdichtungen 24a, 24b, die mit einer gewissen Vorspannung in den Hohlkehlen 26 bis 28 sitzen. Wenn die Welle 2 gegenüber dem Maschinengehäuse 3 in Richtung des Pfeils 2a bewegt wird, wird die Ringdichtung 24a komprimiert und die Ringdichtung 24b entlastet. Umgekehrt, wenn die Welle in Richtung des Pfeils 2b bewegt wird, wird die Ringdichtung 24b belastet und die Ringdichtung 24a entlastet. Bei Durchbiegungen der Welle 2 kommt es zu Kippbewegungen des Lagergehäuses 10, und die Ringdichtungen 24a, 24b werden auf einer Seite belastet und auf der anderen Seite entlastet.

Zur glattwandigen Befestigung der inneren Ringscheibe 23 an dem Dichtungs- und Lagergehäuse 10 sind mit Kappen abgedeckte, versenkte Schrauben 31 vorgesehen. Die äußere Ringscheibe 25 weist einen radial äußeren Flansch 32 auf, der an einem Ringsteg 33 des Maschinengehäuses 3 über einen Kranz von Schrauben 34 befestigt ist. Eine Ringdichtung 35 sorgt für Abdichtung zwischen dem äußeren Befestigungsring 25 und dem Maschinengehäuse 3.

Um die Dichtungen 24a, 24b während des Transports zu schonen und den Einbau der Wellendichtung zu erleichtern, ist eine Montagehilfe 40 in Form dreier Laschen 41 vorgesehen, die um den Umfang verteilt an dem äußeren Befestigungsteil 25 mit Schrauben 42 schwenkbar befestigt sind und mit einer Nut 43 im Lagergehäuse 10 zusammenarbeiten. Wenn die Laschen 41 in die Nut 43 eingreifen, wie dargestellt, ist das Lagergehäuse gegenüber dem Befestigungsteil 25 festgelegt. Diese Stellung wird beim Transport und dem Einbau der Wellendichtung eingenommen. Nach der Montage werden die Laschen 41 aus der Nut 43 herausgeschwenkt und in dieser herausgeschwenkten Lage durch Festziehen der Schraube 42 gehalten.

Fig. 2 zeigt einen Längsschnitt durch den Rand einer Rührwerksdichtung. Gleichartige Teile werden mit den gleichen Bezugszeichen wie zuvor belegt. Statt zweier Kugellager kann die Wälzlagereinrichtung 11 ein Schulterkugellager umfassen. Bei diesem bilden die Abstützstellen zwei Kegel, deren Spitzen voneinander wegstreben, wie durch die Linien 18a, 19a angedeutet. Ein solches Schulterkugellager ermöglicht Durchbiegungen der Welle 2 um 1°, wie dargestellt, ohne daß der Lauf der Kugeln beeinträchtigt wäre.

Die Ausführungsform nach Fig. 2 umfaßt ferner eine Gassperrkammer 51 und eine Leckagekontrollkammer 52. Das Lagergehäuse 10 umfaßt nicht dargestellte Kanäle, die zu diesen Kammern 51 und 52 führen. Durch Einführung von Druckgas in die Kammer 51 kann eine Leckage abgedichtet werden, wenn durch einen Sensor in der Leckagekontrollkammer 52 Undichtigkeit festgestellt wird. Wie Fig. 2 zeigt, kann das ringförmige Befestigungsteil 23 noch einen elastischen Abstreifring 53 aufnehmen.

Mit der Wellenabdichtung können Drücke von 10 bis 25 bar, mit Sonderkonstruktionen noch darüber, abgedichtet werden. Die Wellendichtung zeichnet sich dadurch aus, daß praktisch kein Totraum in der Nähe des abzudichtenden Spaltes 1 vorhanden ist. Dies ist wegen der Reinigungsmöglichkeiten bei vielen Anwendungen erwünscht.

## Patentansprüche

1. Wellenabdichtung zum Abdichten zwischen einer Welle (2) und einem Maschinengehäuse (3), mit folgenden Merkmalen: ein Dichtungs- und Lagergehäuse (10), welches die abzudichtende Welle (2) umgibt und im axialen Abstand voneinander eine Wälzlagereinrichtung (11) sowie eine Reihe von Lippendichtungen (13) aufweist, die mit ihren Dichtlippen eine rotationssymmetrische Oberfläche (12) berühren,die durch Durchbiegungen oder thermische Dehnungen der Welle (2) Veränderungen erfährt;
eine Ausgleichseinrichtung (14), um es dem Dichtungs- und Lagergehäuse zu ermöglichen, den Durchbiegungen und thermischen Dehnungen der Welle zu folgen, wobei die Ausgleichseinrichtung (14) einerseits über ein radial inneres, ringförmiges Befestigungsteil (23) mit dem Dichtungs- und Lagergehäuse (10) und andererseits über ein radial äußeres, ringförmiges Befestigungsteil (25) mit dem Maschinengehäuse (3) abdichtend verbunden ist und einen elastischen Überbrückungsabschnitt (24) zwischen den ringförmigen Befestigungsteilen (23, 25) aufweist;
**dadurch gekennzeichnet,**
**dass** das Lagergehäuse (10) und das radial innere, ringförmige Befestigungsteil (23) im axialen Abstand von der Wälzlagereinrichtung (11) jeweils radial innere Sitzaussparungen (26, 28) und das radial äussere, ringförmige Befestigungsteil (25) radial äussere Sitzaussparungen (27) aufweisen, und
**dass** der Überbrückungsabschnitt (24) eine erste und eine zweite Elastomer-Ringdichtung (24a, 24b) enthält, die im axialen Abstand voneinander in den jeweiligen Sitzaussparungen (26, 27, 28) des Lagergehäuses (10) und der Befestigungsteile (23, 25) angeordnet sind, um einerseits das Gehäuseinnere (3) abzudichten und andererseits dem Lagergehäuse (10) eine begrenzte Beweglichkeit relativ zu dem Maschinengehäuse (3) zu ermöglichen, wie durch die Welle (2) bedingt.

2. Wellendichtung nach Anspruch 1,
**dadurch gekennzeichnet,**
**daß** die Elastomer-Ringdichtungen (24a, 24b) kreisförmigen Querschnitt aufweisen,
**daß** zwischen Lagergehäuse (10) und äußerem ringförmigem Befestigungsteil (25) umlaufende Eckenaussparungen (27, 28) mit jeweils viertelkreisförmigem Querschnitt zur Aufnahme der ersten Ringdichtung (24a) vorgesehen sind, und
**daß** zwischen innerem ringförmigem Befestigungsteil (23) und äußerem ringförmigem Befestigungsteil (25) jeweils weitere umlaufende Eckenaussparungen (26, 27) mit viertelkreisförmigem Querschnitt zur Aufnahme der zweiten Ringdichtung (24b) vorgesehen sind.

3. Wellendichtung nach Anspruch 1 oder 2,
**dadurch gekennzeichnet, daß** das innere ringförmige Befestigungsteil (23) zur Festlegung der Lippendichtungen (13) angeordnet ist.

4. Wellendichtung nach Anspruch 3,
**dadurch gekennzeichnet, daß** das innere ringförmige Befestigungsteil (23) einen elastischen Abstreifring (53) an seinem Innenradius umfaßt.

5. Wellendichtung nach einem der Ansprüche 1 bis 4,
**dadurch gekennzeichnet, daß** eine Sperrgaskammer (51) in die Reihe der Lippendichtungen (13) mit einbezogen ist.

6. Wellendichtung nach einem der Ansprüche 1 bis 5,
**dadurch gekennzeichnet, daß** eine Leckagekontrollkammer (52) in die Reihe der Lippendichtungen (13) mit einbezogen ist.

7. Wellendichtung nach einem der Ansprüche 1 bis 6,
**dadurch gekennzeichnet, daß** das äußere ringförmige Befestigungsteil (25) einen äußeren Befestigungsflansch (32) aufweist, der an einem Ringsteg (33) des Maschinengehäuses (3) befestigbar ist.

8. Wellendichtung nach einem der Ansprüche 1 bis 7,
**dadurch gekennzeichnet, daß** am äußeren ringförmigen Befestigungsteil (25) ein- und ausschwenkbare Laschen (41) vorgesehen sind, die in Nuten (43) des Lagergehäuses eingreifen können, um damit den Zusammenhalt zwischen dem Lagergehäuse (10) und dem äußeren ringförmigen Befestigungsteil (25) während der Montage der Wellendichtung zu sichern.

## Claims

1. A shaft seal for sealing between a shaft (2) and a machine housing (3), with the following features: a sealing and bearing housing (10), which surrounds the shaft (2) for sealing and has, axially spaced apart, an antifriction bearing device (11) and a series of lip seals (13) which by their sealing lips contact a rotationally symmetrical surface (12) which experiences changes due to deflections or thermal expansions of the shaft (2);
a compensating device (14) to enable the sealing and bearing housing to follow the deflections and thermal expansions of the shaft, the compensating device (14) being sealingly connected, on the one hand via a radially inner annular fixing part (23), to the sealing and bearing housing (10) and, on the other hand, via a radially outer annular fixing part (25) to the machine housing (3) and having an elastic bridging portion (24) between the annular fixing parts (23, 25);
**characterised in that**
the bearing housing (10) and the radially inner annular fixing part (23) have, axially spaced from the antifriction bearing device (11), respectively radially inner seat recesses (26, 28) and the radially outer annular fixing part (25) has radially outer seat recesses (27), and
**in that** the bridging portion (24) contains a first and a second elastomer ring seal (24a, 24b) which are disposed axially spaced apart in the respective seat recesses (26, 27, 28) of the bearing housing (10) and of the fixing parts (23, 25) in order on the one hand to seasl off the housing interior (3) and, on the other hand, provide the bearing housing (10) with a limited mobility relatively to the machine housing (3) as required by the shaft (2).

2. A shaft seal according to claim 1,
**characterised in that**
the elastomer ring seals (24a, 24b) have a circular cross-section,
**in that** between the bearing housing (10) and the outer annular fixing part (25) there are provided continuous corner recesses (27, 28) with respectively a quadrant-shaped cross-section to receive the first ring seal (24a), and
**in that** between the inner annular fixing part (23) and the outer annular fixing part (25) there are provided respectively further continuous corner recesses (26, 27) with a quadrant-shaped cross-section to receive the second ring seal (24b).

3. A shaft seal according to claim 1 or 2,
**characterised in that** the inner annular fixing part (23) is arranged for fixing of the lip seals (13).

4. A shaft seal according to claim 3,
**characterised in that** the inner annular fixing part (23) comprises an elastic wiper ring (53) at its inner radius.

5. A shaft seal according to any one of claims 1 to 4, **characterised in that** a barrier gas chamber (51) is included in the row of lip seals (13).

6. A shaft seal according to any one of claims 1 to 5, **characterised in that** a leakage control chamber (52) is included in the row of lip seals (13).

7. A shaft seal according to any one of claims 1 to 6, **characterised in that** the outer annular fixing part (23) has an outer fixing flange (32) fixable on an annular web (33) of the machine housing (3).

8. A shaft seal according to any one of claims 1 to 7, **characterised in that** inwardly and outwardly pivotable links (41) are provided on the outer annular fixing part (25) and can engage in grooves (43) of the bearing housing in order thus to secure the cohesion between the bearing housing (10) and the outer annular fixing part (25) during assembly of the shaft seal.

## Revendications

1. Garniture d'étanchéité d'arbre permettant une étanchéité entre un arbre (2) et un carter de moteur (3), comprenant les caractéristiques suivantes :
un logement de garniture et de palier (10) entourant l'arbre (2) qui doit être rendu étanche et présentant, distants axialement l'un de l'autre, un dispositif de palier à rouleaux (11) ainsi qu'une rangée de joints à lèvres (13) qui touchent, avec leurs lèvres d'étanchéité, une surface symétrique en rotation (12) qui subit des changements sous l'effet des déflexions ou des dilatations thermiques de l'arbre (2) ;
un dispositif de compensation (14) pour permettre au logement de garniture et de palier de suivre les déflexions et les dilatations thermiques de l'arbre, le dispositif de compensation (14) étant relié de manière étanche d'une part au logement de garniture et de palier (10) par un élément de fixation annulaire (23) radialement intérieur et d'autre part au carter de moteur (3) par un élément de fixation annulaire (25) radialement extérieur et présentant une section de recouvrement (24) élastique entre les éléments de fixation annulaires (23, 25) ;
**caractérisée en ce que** :
le logement de palier (10) et l'élément de fixation annulaire (23) radialement intérieur présentent, à une distance axiale du dispositif de palier à rouleaux (11), respectivement des évidements de réception radiaux intérieurs (26, 28) et l'élément de fixation annulaire (25) radialement extérieur présente des évidements de réception radiaux extérieurs (27), et
la section de recouvrement (24) contient un premier et un second joints d'étanchéité annulaires en élastomère (24a, 24b) qui sont disposés à distance axiale l'un de l'autre dans les évidements de réception respectifs (26, 27, 28) du logement de palier (10) et des éléments de fixation (23, 25) pour rendre étanche d'une part l'intérieur du carter (3) et, d'autre part, pour permettre une mobilité réduite du logement de palier (10) par rapport au carter de moteur (3), comme conditionné par l'arbre (2).

2. Garniture d'étanchéité d'arbre selon la revendication 1, **caractérisée en ce que**
les joints annulaires en élastomère (24a, 24b) présentent une section circulaire,
entre le logement de palier (10) et l'élément de fixation annulaire extérieur (25) des évidements angulaires (27, 28) circonférentiels qui ont chacun une coupe transversale en quart de cercle pour recevoir le premier joint d'étanchéité annulaire (24a) sont prévus, et
entre l'élément de fixation annulaire intérieur (23) et l'élément de fixation annulaire extérieur (25), sont prévus respectivement d'autres évidements angulaires (26, 27) circonférentiels avec une coupe transversale en quart de cercle pour recevoir le second joint d'étanchéité annulaire (24b).

3. Garniture d'étanchéité d'arbre selon la revendication 1 ou 2, **caractérisée en ce que**
l'élément de fixation annulaire intérieur (23) est disposé pour bloquer les joints à lèvres (13).

4. Garniture d'étanchéité d'arbre selon la revendication 3, **caractérisée en ce que**
l'élément de fixation annulaire intérieur (23) comprend un anneau racleur élastique (53) sur son rayon interne.

5. Garniture d'étanchéité d'arbre selon l'une des revendications 1 à 4, **caractérisée en ce que**
une chambre à gaz de barrage (51) est intégrée dans la rangée des joints à lèvres (13).

6. Garniture d'étanchéité d'arbre selon l'une des revendications 1 à 5, **caractérisée en ce que**
une chambre de contrôle des fuites (52) est intégrée dans la rangée des joints à lèvres (13).

7. Garniture d'étanchéité d'arbre selon l'une des revendications 1 à 6, **caractérisée en ce que**
l'élément de fixation annulaire extérieur (25) présente une bride de fixation extérieure (32) qui peut être fixée à une entretoise annulaire (33) du carter de moteur (3).

8. Garniture d'étanchéité d'arbre selon l'une des revendications 1 à 7, **caractérisée en ce que**
sur l'élément de fixation annulaire extérieur (25), sont prévues des éclisses (41) engageables et désengageables qui peuvent s'engrener dans des rainures (43) du logement de palier pour assurer ainsi une solidarisation entre le logement de palier (10) et l'élément de fixation annulaire extérieur (25) pendant le montage de la garniture d'étanchéité d'arbre.
